# EUROPEAN PATENT SPECIFICATION

(11) **EP 2 231 469 B1**
(45) Date of publication and mention of the grant of the patent: **24.04.2013**
(21) Application number: 08864972.8
(22) Date of filing: 22.12.2008
(51) Int. Cl.: B63B 9/06, F03D 1/00

(54) **METHOD FOR INSTALLING AN OFFSHORE WIND TURBINE AND A BARGE SYSTEM**
VERFAHREN ZUR INSTALLATION EINER OFFSHORE-WINDTURBINE UND KAHNSYSTEM
PROCÉDÉ D'INSTALLATION D'UNE ÉOLIENNE EN MER ET SYSTÈME DE BARGE

(30) Priority: 21.12.2007 DK 200701865; 21.12.2007 US 15812 P
(43) Date of publication of application: 29.09.2010
(73) Proprietor: Vestas Wind Systems A/S, 8200 Aarhus N (DK)
(72) Inventor: BOTWRIGHT, Adrian, DK-8362 Hørning (DK)
(74) Representative: Inspicos A/S
(86) International application number: PCT/DK2008/000447
(87) International publication number: WO 2009/080035

(56) References cited:
- WO-A1-99/43956
- WO-A1-03/066426
- WO-A1-03/093584
- DE-A1- 10 332 382
- FR-A1- 2 849 877
- GB-A- 2 423 108
- US-A- 4 413 926

## Description

### Background of the invention

The invention relates to a method for installing an offshore wind turbine and a barge system.

### Description of the Related Art

Currently the installation of off-shore wind turbines is carried out with the use of large specialist crane vessels and barges, primarily because of the weights and elevations of the lifts required.

For the near shore wind farm market the installation has been supported almost exclusively by jack-up vessels. The availability of these vessels is becoming more and more limited as the number of off-shore developments increases and consequently the demand for their services increases. With conventional installation, the various wind turbines are transported in sections and erected at the offshore site.

As an alternative to conventional installation, the float-over method has been suggested. This method utilizes conventional off-shore transport barges which are available in large numbers and at a fraction of the cost.

Patent application GB 2 423 108 A discloses a method for installation of offshore structures such as wind turbines with the use of e.g. barges to support the structure. In DE 103 32 385 wind turbines are transported on a vessel comprising two hulls and with a mounting unit for moving the mast from a slanting position into its upright position.

A disadvantage of both these described methods is that the wind turbine is transported in horizontal position and that the methods require a great amount of specialized apparatus to transport, to bring the wind turbine to a standing position and to install the wind turbine on a foundation.

WO 03/093584 discloses a method and a vessel for manipulating an offshore construction provided with a mast such as an offshore windmill. Here is used a jack-up vessel seeking to eliminating movement, and sea wave impact by the vessel hull being completely lifted out of the water, which however most often is a very costly procedure.
It is an object of the present invention to provide technique without the above mentioned disadvantages and to simplify the construction of the transport vessel and hereby increase its operational reliability, capability and flexibility and further to simplify the installation process of offshore wind turbines

### The invention

The present invention relates to a method for installing an offshore wind turbine comprising the steps of:
- preparing an offshore foundation for receiving and retaining a base of said wind turbine,
- moving said wind turbine in substantially vertical (erected) position from an onshore position to a transit position on a barge system, said barge system comprises one or more ballast tanks,
- transporting said barge system to the site of said offshore foundation, and docketing said barge to said offshore foundation,
- moving said wind turbine from said transit position to an installation position on said barge system,
- positioning said base of the wind turbine in relation to said foundation, and
- lowering the barge system in relation to the water level by at least partly filling one or more of said ballast tanks of the barge system so that said base of the wind turbine engages with said prepared offshore foundation, and wherein at least one of said moving steps comprises skidding said wind turbine along cantilever means connected to the barge.

By the term base of wind turbine is meant the substantially lowest part of a wind turbine tower of a wind turbine in substantially vertical position. The base comprises means for connecting the wind turbine to said foundation.

By the term engages is meant that said base of the wind turbine coming in contact with said foundation and that substantially the whole weight of the wind turbine is transferred from said barge to said foundation.

Hereby an advantageous installation of an offshore wind turbine on a prepared foundation is ensured.

Furthermore it is ensured that the installation time is decreased for a single wind turbine as well as for a plurality of turbines.

It is also ensured that the wind turbines can be erected, tested and pre-commissioned onshore before transportation and installation offshore. This in turn reduces installation time and decreases the weather sensibility of the processes.

Even further it is ensured that the installation process can be carried out using conventional offshore transport barges and the process requires only a minimum amount of specialized equipment and tools such as equipment that can be shipped in a kit of parts and mobilise and demobilise to different barges at other installation sites.

According to one aspect of the invention, said offshore wind turbine comprises a transition piece connected to the turbine base. Hereby it is ensured that the wind turbine is adapted and prepared for installation on the offshore foundation. It is furthermore ensured that an easy and fast installation process is prepared. It is further ensured that the wind turbine and the transition piece can be installed and prepared onshore e.g. at suitable production facilities.

In another aspect of the invention, said offshore foundation comprises a transition piece counterpart in the upper part of the foundation. Hereby it is ensured that the foundation is adapted and prepared for receiving and installation of said offshore wind turbine.

In other aspects of the invention, said transition piece and/or said transition piece counterpart comprises alignment and/or docking and/or impact absorption interfaces. Hereby it is ensured that the installation procedure of engaging the wind turbine transition piece and the foundation transition counterpart is optimized. By comprising an alignment interface, optimal precision, keeping tolerances within limits set up is ensured. By comprising docking interface it is ensured that the barge is kept substantially at the correct position during installation, and by comprising impact absorption interface it is ensured that neither the wind turbine, components of the wind turbine, the foundation or the barge system are damaged during installation.

In yet another aspect of the invention said barge system comprises more than one transit positions for said substantially vertical positioned offshore wind turbines. Hereby it is ensured that the barge can carry more that one wind turbine for installation at a time. It is ensured that the installation time is minimized as the barge not necessarily needs to return to an onshore location to pickup a new wind turbine, after each wind turbine installation, but the barge can be transported from one foundation to the next with wind turbines, until the wind turbines that the barge carries have been installed.

By the lowering of the barge system by at least partly filling one or more of said ballast tanks of the barge system is ensured that the wind turbine can be installed on said prepared foundation by engaging said wind turbine transition with said foundation transition piece counterpart. It is further ensured that the process of lowering the barge system is done by standard means available on most conventional barges, and it is ensured that the process of lowering the barge system is fast and reliable.

In another aspect of the invention, one or more of said ballast tanks of the barge system can be at least partly filled during transport in order to stabilize the said barge system. Hereby it is ensured that the barge is stabilized during transport, which in turn ensures that the transported wind turbines are not damaged.

In a yet another aspect of the invention, said lowering the barge system furthermore comprises establishing permanent tension in tractive means connected to anchoring means established substantially at or on the seabed. Hereby it is ensured that the wind turbine can be installed on said prepared foundation by engaging said wind turbine transition with said foundation transition piece counterpart.

In a further aspect of the invention, said method further comprises the step of further lowering the barge system in relation to the water level after said part of the wind turbine engages with said prepared offshore foundation. Hereby it is ensured that the barge system can obtain clearance to the wind turbine and the foundation and it is ensured that the barge can be moved away from the installation site e.g. to next site of installation.

In an even further aspect of the invention, the barge system comprises means for adjusting the horizontal as well as the vertical position of the wind turbine to be installed in relation to said foundation. Hereby it is ensured that the wind turbine and the foundation can be positioned very precisely in relation to each other.

In another aspect of the invention, the barge system comprises a mating and load transfer system such as elastomeric spring units acting between the wind turbine transition piece, the foundation transition piece counterpart, the barge, the foundation and the wind turbine, or any combination hereof, in order to absorb impact loads during installation. Hereby it is ensured that the wind turbine, components of the wind turbine, the barge and the foundation is not damaged during the installation process.

In another aspect of the invention, the wind turbine includes a transition piece connected to the turbine base and said offshore foundation includes a transition piece counterpart in the upper part of the foundation, wherein said transition piece and said transition piece counterpart are prepared for receiving and retaining each other and wherein the wind turbine and the offshore foundation comprises a mating and load transfer system such as elastomeric spring units acting between the wind turbine transition piece, the foundation transition piece counterpart, the foundation and the wind turbine, or any combination hereof, in order to absorb impact loads during installation.

In a further aspect, the invention relates to a barge system, wherein said system comprises a barge having one or more vertically positioned wind turbines arranged for transport thereof to an offshore foundation, said wind turbines comprises at least a wind turbine tower and a nacelle mounted on top of said wind turbine tower wherein said barge system comprises cantilever means connected to said barge for skidding said wind turbine, and one or more ballast tanks for raising or lowering the barge system in relation to the water level, and wherein said barge system comprises cantilever means connected to said barge for skidding said wind turbine, and docking means to dock the barge to the offshore foundation.

In a first embodiment of this aspect, said wind turbines further comprises a rotor mounted on the nacelle, said rotor comprises at least one rotor blade.

In a second embodiment of the aspect, the system comprises positioning means suitable for adjusting the horizontal as well as the vertical position of the wind turbine in relation to the barge.

In a further embodiment of the second embodiment, said positioning means comprises one or more jacking systems.

In an embodiment of this aspect, the barge system comprises a mating and load transfer system such as elastomeric spring units acting between the barge and a wind turbine transition piece connected to the turbine base, a foundation transition piece counterpart prepared for receiving and retaining said wind turbine transition piece, a foundation and the wind turbine, or any combination hereof, in order to absorb impact loads during installation.

### Figures

The invention will be described in the following with reference to the figures in which
- fig. 1.: illustrates schematically the initial process of loading a wind turbine in substantially vertical position from an onshore position to a transit position on a transport barge system according to one embodiment of the invention,
- fig. 2: illustrates schematically a barge system loaded with a plurality of wind turbines according to one embodiment of the invention,
- fig. 3: illustrates a barge system being transported to the site of a prepared offshore foundation according to one embodiment of the invention,
- fig. 4: illustrates schematically moving a wind turbine from its transit position to an installation position on a barge system according to one embodiment of the invention,
- fig. 5a: illustrates lowering the barge system in relation to the water level so that the wind turbine engages with the offshore foundation according to one embodiment of the invention,
- fig. 5b: illustrates schematically a wind turbine transition piece and a foundation transition piece counterpart engaged during installation of an offshore wind turbine according to one embodiment of the invention,
- fig. 5c: illustrates schematically an elastomeric spring unit installed at the foundation transition piece counterpart,
- fig. 6: illustrates how the barge is lowered in relation to the water level by filling ballast tanks comprised in the barge system according to one embodiment of the invention,
- fig. 7: illustrates how the barge is lowered in relation to the water level by establishing permanent tension in tractive means connected to e.g. anchoring means established substantially at or on the seabed according to one embodiment of the invention, and
- fig. 8: illustrates wind turbine supports on barge in order to stabilize the wind turbine during transport and installation.

### Detailed description of the invention

The present invention relates to the installation of offshore wind turbines, by use of standardized transport barges in combination with float-over installation techniques, to prepared offshore foundations.

Float-over installation has been carried out in the oil and gas sector since the eighties. It is a common method of installing large platform topside modules in the range of 5000 to 18000 tonnes.

The float-over method of installation is the transfer of the load from a free floating transportation barge, subject to the action of wind and waves, to a fixed foundation structure by ballasting the barge. The technique has been further applied to minimal facilities with topside modules weighting in the range of 400 to 1200 tonnes.

The critical landing phase is facilitated by a mating and load transfer system. This system is typically an elastomeric spring unit acting between the load, the fixed foundation, and the transport barge, in order to absorb the impact loads.

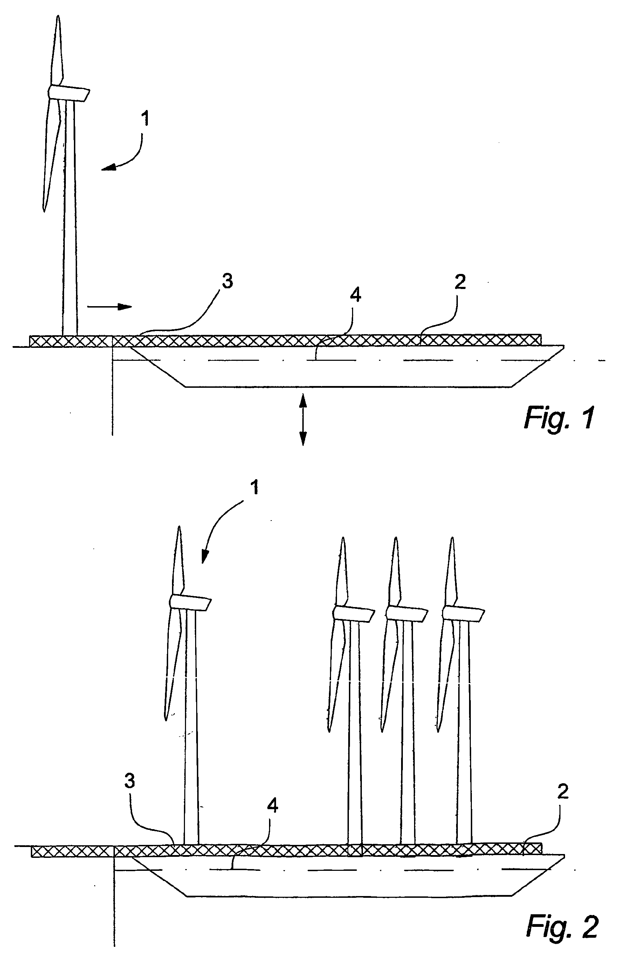

Fig. 1 illustrates schematically the initial process of loading a wind turbine in substantially vertical position from an onshore position to a transit position on a transport barge system according to one embodiment of the invention.

For various embodiments of the invention, the term wind turbine is meant to be a fully or substantially fully assembled wind turbine. The example of an assembled wind turbine but without installed rotor blades is also to be regarded as a wind turbine within the interpretation of the present application.

One or more wind turbines 1 are prepared for installation at an onshore location. Furthermore a transport barge system comprising a barge 2 for transporting large components such as wind turbines is docked to said onshore location. For various embodiments of the invention, the barge system can adjust its height relative to the sea level by the use of filling or draining built-in ballast tanks e.g. in order to position the barge system at the correct level in relation to said onshore location during loading of the wind turbines, as indicated by arrows on the figure.

The barge is prepared for receiving and retaining one or more vertical positioned wind turbines on one or more transit positions on the barge. Furthermore the barge is supplied with cantilever means 3 which for various embodiments of the invention has various functions such as support of the vertical positioned wind turbines under loading, transportation and/or installation. The cantilever is a fixed beam, connected to the barge.

For further embodiments of the invention the barge is supplied with more than one cantilever means 3.

The said one or more vertically positioned wind turbines are loaded to said transit positions on the barge system such as by skidding the wind turbine along the cantilever means 3, as indicated by arrows on the figure or by lifting the wind turbine by e.g. one or more cranes.

Fig. 2 illustrates schematically a barge system loaded with a plurality of wind turbines according to one embodiment of the invention.

As illustrated in an embodiment of the invention, more than one wind turbine can be loaded to the barge system for transportation at the same time. The wind turbines may for one embodiment be loaded by the use of cantilever means 3.

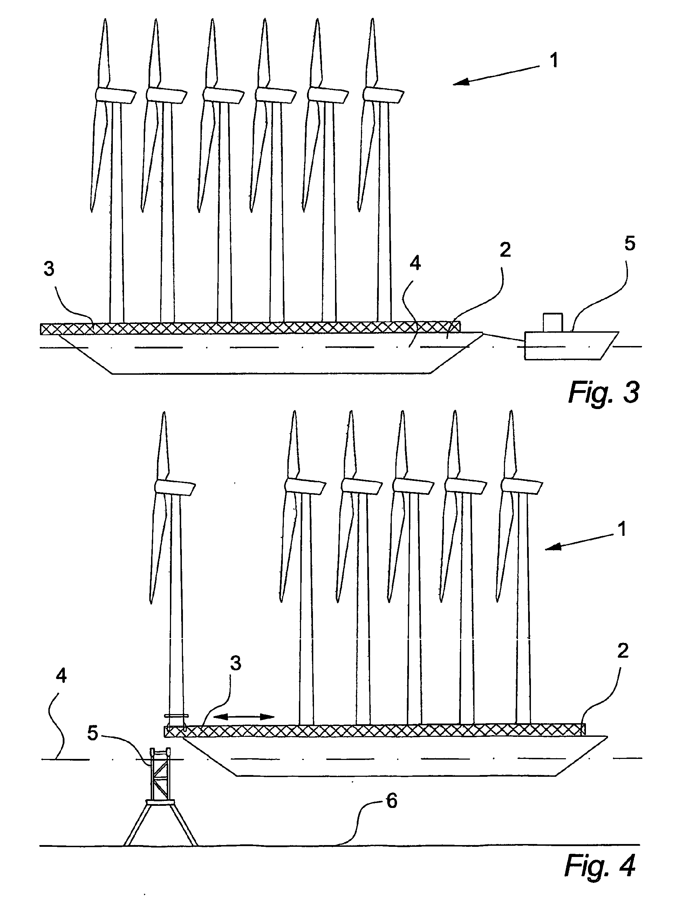

Fig. 3 illustrates a barge system being transported to the site of a prepared offshore foundation according to one embodiment of the invention.

When the one or more wind turbines are positioned on said transit positions on the barge, the barge system is transported to the site of installation i.e. to the site of an offshore foundation. The barge system may for one embodiment be towed by e.g. a tow vessel.

The said offshore foundation is prepared as to receive and retain a part of the wind turbine and comprises means for mounting the wind turbine to the foundation.

When the barge system reaches the site of installation it must be docked to the offshore foundation. Docking is accomplished using the tow vessel to position the transport barge in combination with a mooring spread.

For one embodiment of the invention, fendering between the barge and foundation further locates the barge relative to the foundation.

When the barge has reached its destination site of installation, it is docked to the foundation 5 located e.g. on the seabed 6, for the purpose to maintain the barge, and thus the wind turbine to be installed, at a substantially correct horizontal position during the installation procedure.

Fig. 4 illustrates schematically moving a wind turbine from its transit position to an installation position on a barge system according to one embodiment of the invention.

The mooring spread and fendering used to dock the barge and foundation reduce the barge motions to allow the installation to proceed.

When the barge is docked, the wind turbine to be installed is moved from its transit position on the barge to an installation position e.g. by skidding. The wind turbine may at this point for embodiments of the invention, be supported by the one or more cantilever means 3.

According to the invention during this step the lowest part of the base of the wind turbine which is to be mounted in the foundation, is in a higher vertical position than the top of the foundation 3 and the items are therefore clear from collision.

According to various embodiments of the invention, the barge system comprises means for further adjusting the horizontal as well as the vertical position of the wind turbine to be installed in relation to the foundation even when the barge is docked. The said means can comprise jacking systems and is for one embodiment connected to said cantilever means 3. The means for adjusting the vertical position of the wind turbine can compensate the position for e.g. tidal, waves etc.

In one embodiment of the invention the installation is performed substantially at the bow of the barge system. However in other embodiments the installation of the wind turbine is performed at one of the sides or at the stem of the barge.

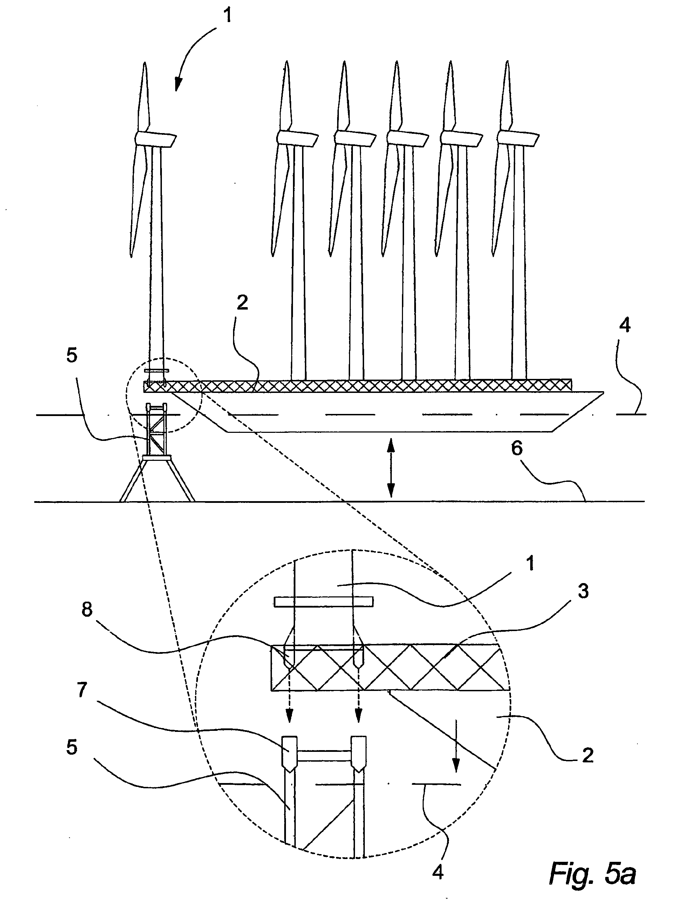

Fig. 5a illustrates lowering the barge system in relation to the water level so that the wind turbine engages with the offshore foundation according to one embodiment of the invention.

The barge is ballasted down so that the turbine makes contact with the foundation. The ballasting continues after the initial contact to transfer the turbine to the foundation.

The lower section of the tower is the interface unit between the base of the turbine tower and the foundation. It will incorporate the method of aligning the turbine and foundation during landing. Furthermore it will for various embodiments, incorporate the impact reducing units for landing, although these could for other embodiments be in the top of the foundation. Even further it is the base on which the tower is assembled onshore and skidded onto/along the barge.

For the illustrated embodiment of the invention, the base of the wind turbine, which is to be mounted in the foundation, comprises a transition piece 8 connected to the turbine base incorporating the alignment, docking and impact absorption interfaces. Said transition piece 8 fits substantially to a transition piece counterpart 7 comprised in the upper part of the foundation.

According to the invention the barge system is lowered in relation to the water level so that the wind turbine transition piece 8 engage with the foundation transition piece counterpart 7 as indicated by arrows on the figure.

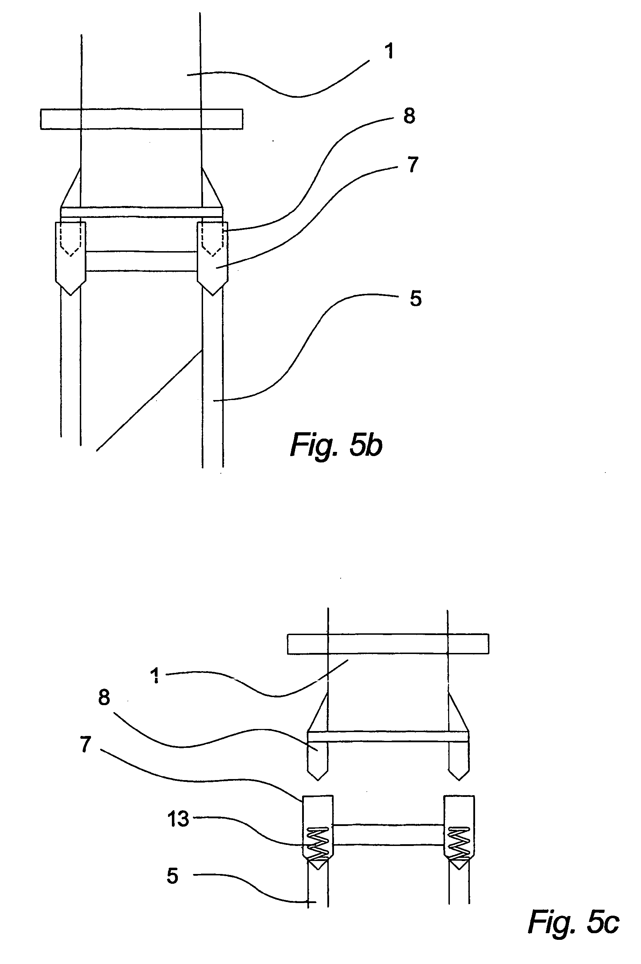

This is further schematically illustrated in fig. 5b, where the wind turbine transition piece and the foundation transition piece counterpart are illustrated when engaged.

As illustrated in fig. 5c, the critical landing phase is facilitated by e.g. a mating system that is designed to mitigate the impact loads during the initial mating and load transfer. For one embodiment this system is elastomeric spring units acting between the wind turbine and the foundation, and the wind turbine and the barge to absorb the impact loads. Fig. 5c schematically illustrates an elastomeric spring unit at the foundation transition piece counterpart, prepared to receive the loads applied by the wind turbine transition part when it is lowered into the counterpart.

It should be understood that other types of interfaces for impact absorption can be used such as by various hydraulic systems, by cladding the transition pieces with elastic material etc.

In one embodiment of the invention the barge system comprises means for stabilizing the wind turbine during the installation as the wind turbine is susceptible to wind and wind gusts, as well as the barge is susceptible to e.g. current, waves, surge and sway.

When the wind turbine is engaged and installed in the foundation i.e. the load of the wind turbine is substantially fully carried by the foundation, the barge continues to ballast down until the turbine is clear and the barge can release its docking means and sail or be e.g. towed away from the site of installation.

As soon as the barge is free of the wind turbine and the foundation, the barge can be re-raised in relation to the water level. If the barge carries more wind turbines it can be transported to next prepared foundation.

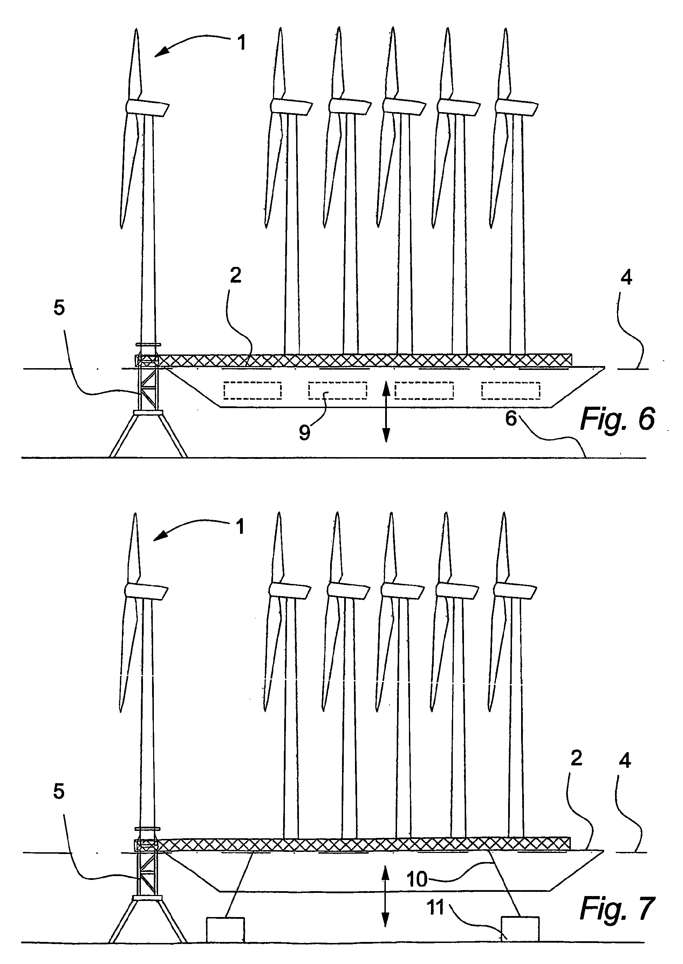

According to the invention, the barge is lowered in relation to the water level by filling ballast tanks comprised in the barge system. This is schematically illustrated in figure 6 according to one embodiment of the invention. The barge 2 comprises ballast tanks 9 that can be filled and drained with seawater. A pumping and control system manages the process of said filling and draining.

According to a preferred embodiment of the invention, the barge is lowered in relation to the water level by establishing permanent tension in tractive means 10 connected to e.g. anchoring means 11 established substantially at or on the seabed 6 as schematically illustrated in figure 7. Tractive means also comprises means that is able to regulate and/or dynamically control the established tension in e.g. wires connected to the anchoring means 11.

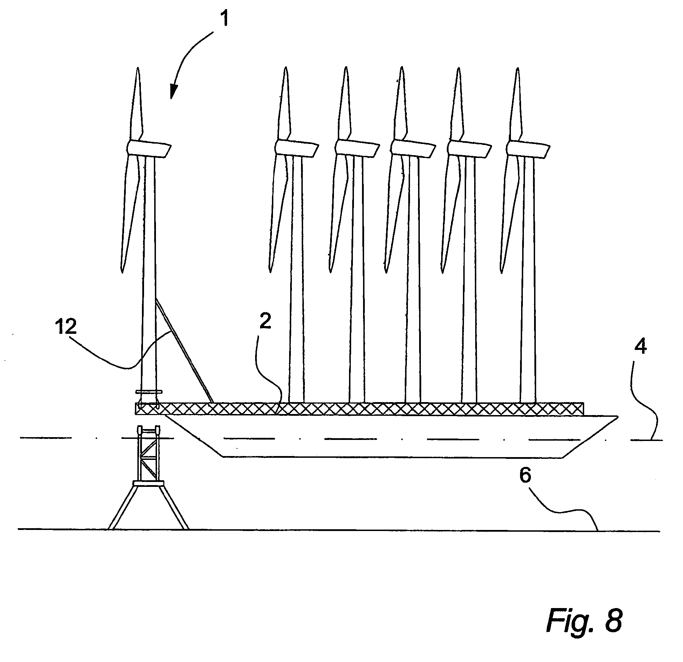

Figure 8 illustrates schematically for one embodiment of the invention, supports on barge in order to stabilize the wind turbine during transport and installation.

In case that the wind turbine is not stabilized enough on the transport barge, either during loading, on its transit position and/or during installation, supports 12 may be used to support to the tower of the wind turbine in order to keep it in an upright position without overturning. The supports 12 may extent in one or more directions relative to the transport barge.

### List

| | |
|---|---|
| 1. | Wind turbine |
| 2. | Barge |
| 3. | Support part |
| 4. | Vessel |
| 5. | Wind turbine foundation |
| 6. | Seabed |
| 7. | Foundation transition piece counterpart |
| 8. | Wind turbine transition piece |
| 9. | Ballast tanks |
| 10. | Tractive means |
| 11. | Anchoring means |
| 12. | Supports |
| 13. | Elastomeric spring unit |

## Claims

1. A method for installing an offshore wind turbine (1) comprising the steps of:
- preparing an offshore foundation (5) for receiving and retaining a base of said wind turbine,
- moving said wind turbine in substantially vertical position from an onshore position to a transit position on a barge system (2), said barge system comprises one or more ballast tanks (9),
- transporting said barge system (2) to the site of said offshore foundation (5), and,
- moving said wind turbine from said transit position to an installation position on said barge system,
- positioning said base of the wind turbine in relation to said foundation, and
wherein at least one of said moving steps comprises skidding said wind turbine along cantilever means connected to the barge, and
wherein the method is **characterized by** comprising the steps of:
- docking said barge (2) to said offshore foundation (5), and
- lowering the barge system in relation to the water level by at least partly filling one or more of said ballast tanks (9) of the barge system so that said base of the wind turbine engages with said prepared offshore foundation.

2. A method according to claim 1, wherein said offshore wind turbine (1) comprises a transition piece (8) connected to the turbine base.

3. A method according to any of claims 1 or 2, wherein said offshore foundation (5) comprises a transition piece counterpart (7) in the upper part of the foundation.

4. A method according to any of claims 2 and/or 3, wherein said transition piece (8) and/or said transition piece counterpart (7) comprises alignment and/or docking and/or impact absorption interfaces.

5. A method according to claim 1, wherein said barge system (2) comprises more than one transit positions for said substantially vertical positioned offshore wind turbines (1).

6. A method according to any of the preceding claims, wherein one or more of said ballast tanks (9) of the barge system are at least partly filled during transport in order to stabilize the said barge system.

7. A method according to any of the preceding claims, wherein said lowering the barge system (2) furthermore comprises establishing permanent tension in tractive means (10) connected to anchoring means (11) established substantially at or on the seabed (6).

8. A method according to claim 1, further comprising the step of further lowering the barge system (2) in relation to the water level after said part of the wind turbine engages with said prepared offshore foundation (5).

9. A method according to any of the preceding claims, wherein the barge system comprises means for adjusting the horizontal as well as the vertical position of the wind turbine (1) to be installed in relation to said foundation (5).

10. A method according to claim 10, wherein said means for adjusting the horizontal as well as the vertical position of the wind turbine comprises one or more jacking systems.

11. A method according to any of the previous claims, wherein said wind turbine (1) includes a transition piece (8) connected to the turbine base and said offshore foundation (5) includes a transition piece counterpart (7) in the upper part of the foundation, wherein said transition piece and said transition piece counterpart are prepared for receiving and retaining each other and wherein the wind turbine and the offshore foundation comprise a mating and load transfer system such as elastomeric spring units (13) acting between the wind turbine transition piece (8), the foundation transition piece counterpart (7), the foundation (5) and the wind turbine (1), or any combination hereof, in order to absorb impact loads during installation.

12. A barge system (2), wherein said system comprises a barge (2) having one or more vertically positioned wind turbines (1) arranged for transport thereof to an offshore foundation (5), said wind turbines comprising at least a wind turbine tower and a nacelle mounted on top of said wind turbine tower, wherein said barge system comprises cantilever means connected to said barge for skidding said wind turbine, and wherein the barge system is **characterized by** comprising one or more ballast tanks (9) for raising or lowering the barge system in relation to the water level, and docking means to dock the barge (2) to the offshore foundation (5).

13. A barge system according to claim 12, wherein said wind turbines further comprises a rotor mounted on the nacelle, said rotor comprises at least one rotor blade.

14. A barge system according to claim 12 or 13, wherein the system comprises positioning means suitable for adjusting the horizontal as well as the vertical position of the wind turbine in relation to the barge.

15. A barge system according to claim 14, wherein said positioning means comprises one or more jacking systems.

16. A barge system according to claim 12 to 15, wherein the barge system comprises a mating and load transfer system such as elastomeric spring units (13) acting between the barge (2) and a wind turbine transition piece (8) connected to the turbine base, a foundation transition piece counterpart (7) prepared for receiving and retaining said wind turbine transition piece, a foundation (5) and the wind turbine (1), or any combination hereof, in order to absorb impact loads during installation.

## Patentansprüche

1. Verfahren zum Installieren einer Offshore-Windturbine (1), die folgenden Schritte umfassend:
- Vorbereiten eines Offshore-Fundaments (5) zum Aufnehmen und Halten einer Basis der Windturbine,
- Bewegen der Windturbine in einer im Wesentlichen vertikalen Position von einer Onshore-Position auf eine Transitposition auf einem Kahnsystem (2), wobei das Kahnsystem ein oder mehrere Ballasttanks (9) umfasst,
- Transportieren des Kahnsystems (2) an den Ort des Offshore-Fundaments (5), und
- Bewegen der Windturbine von der Transitposition auf eine Installationsposition auf dem Kahnsystem,
- Positionieren der Basis der Windturbine in Bezug auf das Fundament, und
wobei mindestens einer der Schritte des Bewegens Schieben der Windturbine entlang eines Auslegermittels umfasst, welches mit dem Kahn verbunden ist, und
wobei das Verfahren **dadurch gekennzeichnet ist, dass** es die folgenden Schritte umfasst:
- Andocken des Kahnsystems (2) an das Offshore-Fundament (5), und
- Absenken des Kahnsystems in Bezug auf den Wasserpegel durch mindestens teilweises Füllen eines oder mehrerer der Ballasttanks (9) des Kahnsystems, so dass die Basis der Windturbine mit dem vorbereiteten Offshore-Fundament in Eingriff gebracht wird.

2. Verfahren nach Anspruch 1, wobei die Offshore-Windturbine (1) ein Übergangsstück (8) umfasst, welches mit der Turbinenbasis verbunden ist.

3. Verfahren nach einem der Ansprüche 1 oder 2, wobei das Offshore-Fundament (5) ein Übergangsstück-Gegenstück (7) in dem oberen Teil des Fundaments umfasst.

4. Verfahren nach einem der Ansprüche 2 und/oder 3, wobei das Übergangsstück (8) und/oder das Übergangsstück-Gegenstück (7) Abgleich- und/oder Andock- und/oder Aufschlagabsorptions-Schnittstellen umfassen.

5. Verfahren nach Anspruch 1, wobei das Kahnsystem (2) mehr als eine Transitposition für die im Wesentlichen vertikal positionierten Offshore-Windturbinen (1) umfasst.

6. Verfahren nach einem der vorhergehenden Ansprüche, wobei einer oder mehrere der Ballasttanks (9) des Kahnsystems während des Transports zumindest teilweise gefüllt werden, um das Kahnsystem zu stabilisieren.

7. Verfahren nach einem der vorhergehenden Ansprüche, wobei das Absenken des Kahnsystems (2) weiterhin Herstellen einer permanenten Spannung in einem Vortriebsmittel (10) umfasst, welches mit einem Ankermittel (11) verbunden ist, welches im Wesentlichen an oder auf dem Meeresboden (6) eingerichtet ist.

8. Verfahren nach Anspruch 1, weiterhin den Schritt des weiteren Absenkens des Kahnsystems (2) in Bezug auf den Wasserpegel umfassend, nachdem das Teil der Windturbine mit dem vorbereiteten Offshore-Fundament (5) in Eingriff gebracht ist.

9. Verfahren nach einem der vorhergehenden Ansprüche, wobei das Kahnsystem ein Mittel zum Einstellen der horizontalen sowie der vertikalen Position der Windturbine (1), welche installiert werden soll, in Bezug auf das Fundament (5) umfasst.

10. Verfahren nach Anspruch 10, wobei das Mittel zum Einstellen der horizontalen sowie der vertikalen Position der Windturbine ein oder mehrere Hebesysteme umfasst.

11. Verfahren nach einem der vorhergehenden Ansprüche, wobei die Windturbine (1) ein Übergangsstück (8) aufweist, welches mit der Turbinenbasis verbunden ist, und das Offshore-Fundament (5) ein Übergangsstück-Gegenstück (7) in dem oberen Teil des Fundaments aufweist, wobei das Übergangsstück und das Übergangsstück-Gegenstück zum Aufnehmen und Halten des jeweils anderen vorbereitet sind und wobei die Windturbine und das Offshore-Fundament ein Pass- und Lastübertragungssystem umfassen, wie beispielsweise Elastomerfedereinheiten (13), welche zwischen dem Windturbinenübergangsstück (8), dem Fundamentübergangsstück-Gegenstück (7), dem Fundament (5) und der Windturbine (1), oder jeder Kombination davon wirken, um Aufschlaglasten bei einer Installation zu absorbieren.

12. Kahnsystem (2), wobei das System einen Kahn (2) mit einer oder mehreren vertikal positionierten Windturbinen (1) umfasst, welche für ihren Transport zu einem Offshore-Fundament (5) angeordnet sind, wobei die Windturbinen mindestens einen Windturbinenturm und eine Gondel umfassen, welche oben auf dem Windturbinenturm befestigt ist, wobei das Kahnsystem ein Auslegermittel, welches mit dem Kahn verbunden ist, zum Schieben der Windturbine umfasst und wobei das Kahnsystem **dadurch gekennzeichnet ist, dass** es einen oder mehrere Ballasttanks (9) zum Anheben oder Absenken des Kahnsystems in Bezug auf den Wasserpegel und ein Andockmittel zum Andocken des Kahns (2) an das Offshore-Fundament (5) umfasst.

13. Kahnsystem nach Anspruch 12, wobei die Windturbinen weiterhin einen Rotor umfassen, welcher an der Gondel befestigt ist, wobei der Rotor mindestens ein Rotorblatt umfasst.

14. Kahnsystem nach Anspruch 12 oder 13, wobei das System ein Positionierungsmittel umfasst, welches zum Einstellen der horizontalen sowie der vertikalen Position der Windturbine in Bezug auf den Kahn geeignet ist.

15. Kahnsystem nach Anspruch 14, wobei das Positionierungsmittel ein oder mehrere Hebesysteme umfasst.

16. Kahnsystem nach Anspruch 12 bis 15, wobei das Kahnsystem ein Pass- und Lastübertragungssystem umfasst, wie beispielsweise Elastomerfedereinheiten (13), welche zwischen dem Kahn (2) und einem Windturbinen-Übergangsstück (8), welches mit der Turbinenbasis verbunden ist, einem FundamentÜbergangsstück-Gegenstück (7), welches zum Aufnehmen und Halten des Windturbinen-Übergangsstücks vorbereitet ist, einem Fundament (5) und der Windturbine (1) oder jeder Kombination davon wirkt, um Aufschlaglasten während einer Installation zu absorbieren.

## Revendications

1. Procédé d'installation d'une éolienne en mer (1) comprenant les étapes de :
- préparation d'une fondation en mer (5) pour recevoir et retenir une base de ladite éolienne,
- déplacement de ladite éolienne en position pour l'essentiel verticale depuis une position à terre vers une position de transit sur un système de barge (2), ledit système de barge comprenant un ou plusieurs réservoirs de ballast (9),
- transport dudit système de barge (2) vers le site de ladite fondation en mer (5) et
- déplacement de ladite éolienne de ladite position de transit vers une position d'installation sur ledit système de barge,
- positionnement de ladite base de l'éolienne en rapport avec ladite fondation et
dans lequel au moins une des dites étapes de déplacement comprend le glissement de ladite éolienne le long d'un moyen en porte-à-faux raccordé à la barge et le procédé étant
**caractérisé en ce qu'**il comprend les étapes de :
- l'amarrage de ladite barge (2) à ladite fondation en mer (5) et
- l'abaissement du système de barge en rapport avec le niveau d'eau en remplissant au moins partiellement un ou plusieurs réservoirs de ballast (9) du système de barge de sorte que ladite base de l'éolienne se met en prise avec ladite fondation en mer,

2. Procédé selon la revendication 1 dans lequel ladite éolienne en mer (1) comprend une pièce de transition (8) raccordée à la base de l'éolienne.

3. Procédé selon une quelconque des revendications 1 ou 2 dans lequel ladite fondation en mer (5) comprend une contre-partie (7) de la pièce de transition dans la partie supérieure de la fondation.

4. Procédé selon une quelconque des revendications 2 et/ou 3 dans lequel ladite pièce de transition (8) et/ou ladite contre-partie (7) de la pièce de transition comprend des interfaces d'alignement et/ou d'amarrage et/ou d'absorption de chocs.

5. Procédé selon la revendication 1 dans lequel ledit système de barge (2) comprend plus d'une position de transit pour lesdites éoliennes en mer (1) positionnées pour l'essentiel verticales.

6. Procédé selon une quelconque des revendications précédentes dans lequel un ou plusieurs réservoirs de ballast (9) du système de barge sont au moins partiellement remplis pendant le transport afin de stabiliser ledit système de barge.

7. Procédé selon une quelconque des revendications précédentes dans lequel ledit abaissement du système de barge (2) comprend en plus le fait d'établir une tension permanente dans un moyen de traction (10) raccordé à un moyen d'ancrage (11) établi pour l'essentiel sur le fond de la mer (6).

8. Procédé selon la revendication 1 comprenant en plus l'étape de baisser encore le système de barge (2) par rapport au niveau de l'eau après que ladite partie de l'éolienne se soit mise en prise avec ladite fondation en mer préparée (5).

9. Procédé selon une quelconque des revendications précédentes dans lequel le système de barge comprend un moyen pour ajuster la position horizontale ainsi que verticale de l'éolienne (1) à installer par rapport à ladite fondation (5).

10. Procédé selon la revendication 1 dans lequel ledit moyen pour ajuster la position horizontale aussi bien que verticale de l'éolienne comprend un ou plusieurs systèmes de vérins.

11. Procédé selon une quelconque des revendications précédentes dans lequel ladite éolienne (1) comprend une pièce de transition (8) raccordée à la base de l'éolienne et ladite fondation en mer (5) comprend une contre-partie (7) de la pièce de transition dans la partie supérieure de la fondation, ladite pièce de transition et ladite contre-partie de la pièce de transition étant préparées pour se recevoir et se retenir l'une et l'autre et dans lequel l'éolienne et la fondation en mer comprennent un système d'accouplement et de transfert de charge comme des unités de ressort en élastomère (13) agissant entre la pièce de transition d'éolienne (8), la contre-partie de pièce de transition de la fondation (7), la fondation (5) et l'éolienne (1) ou toute combinaison de celles-ci afin d'absorber les forces de choc pendant l'installation.

12. Un système de barge (2), dans lequel ledit système comprenant une barge (2) possédant une ou plusieurs éoliennes (1) positionnées verticalement disposées pour le transport de celles-ci vers une fondation en mer (5), lesdites éoliennes comprenant au moins une tour d'éolienne et une nacelle montée au sommet de ladite tour d'éolienne, ledit système de barge comprenant un moyen en porte-à-faux raccordé à ladite barge pour faire glisser ladite éolienne et dans lequel le système de barge est **caractérisé en ce qu'**il comprend un ou plusieurs réservoirs de ballast (9) pour lever ou abaisser le système de barge par rapport au niveau de l'eau et un moyen d'amarrage pour amarrer la barge (2) à la fondation en mer (5).

13. Un système de barge selon la revendication 12 dans lequel lesdites éoliennes comprennent un rotor monté sur la nacelle, ledit moteur comprenant au moins une pale de rotor.

14. Un système de barge selon la revendication 12 ou 13 dans lequel le système comprend un moyen de positionnement convenant pour ajuster la position horizontale aussi bien que verticale de l'éolienne par rapport à la barge.

15. Un système de barge selon la revendication 14 dans lequel ledit moyen de positionnement comprend un ou plusieurs systèmes de vérins.

16. Un système de barge selon la revendication 12 ou 15 dans lequel le système de barge comprend un système d'accouplement et de transfert de charge comme des unités de ressort en élastomère (13) agissant entre la barge (2) et une pièce de transition d'éolienne (8) raccordée à la base de l'éolienne, une contre-partie de la pièce de transition de fondation (7) préparée pour recevoir et retenir ladite pièce de transition d'éolienne, une fondation (5) et l'éolienne (1) ou toute combinaison de celles-ci afin d'absorber les forces de choc pendant l'installation.
